(19) Europäisches Patentamt

European Patent Office

Office européen des brevets

(11) **EP 0 572 303 B1**

(12) **FASCICULE DE BREVET EUROPEEN**

(45) Date de publication et mention
de la délivrance du brevet:
**05.03.1997 Bulletin 1997/10**

(51) Int Cl.$^6$: **G01S 7/52**

(21) Numéro de dépôt: **93401316.0**

(22) Date de dépôt: **21.05.1993**

(54) **Système de traitement d'un signal de réception provenant d'un capteur**

System zur Verarbeitung eines aus einem Umwandler empfangenen Signals

System for processing a signal received from a transducer

(84) Etats contractants désignés:
**DE GB IT NL**

(30) Priorité: **26.05.1992 FR 9206418**

(43) Date de publication de la demande:
**01.12.1993 Bulletin 1993/48**

(73) Titulaire: **VALEO ELECTRONIQUE**
**94042 Creteil Cédex (FR)**

(72) Inventeurs:
• **Pedemas, Didier**
**F-92800 Puteaux (FR)**

• **Pajonk, Jean-Claude**
**F-69650 Quincieux (FR)**

(74) Mandataire: **Lemaire, Marc**
**Valeo Management Services,**
**Sce Propriété Industrielle**
**2, rue André Boulle**
**B.P. 150**
**94004 Créteil (FR)**

(56) Documents cités:
FR-A- 2 364 468     US-A- 3 582 872
US-A- 4 661 936

# Description

La présente invention concerne un système de traitement d'un signal de réception provenant d'un capteur.

Dans l'état de la technique, on connaît des systèmes de traitement du signal qui comportent des moyens de mesure du niveau du signal reçu par un capteur, et des moyens de traitement du signal, notamment de sa fréquence, pour distinguer des événements particuliers.

Un tel système est par exemple décrit dans le document US 4,661,936 concernant un appareil de détection de mouvement par effet Doppler avec un dispositif de compensation des modifications du régime d'ondes stationnaires établi dans l'espace surveillé, modifications pouvant résulter des variations de température et/ou des variations de volume à l'intérieur dudit espace.

Un problème particulier se pose en effet lorsque l'évènement détecté par le capteur est rare et bref, comme c'est le cas pour un évènement constitué par une intrusion dans un habitacle. En effet, dans un système d'alarme ultrasonore, des impulsions ultrasonores sont émises périodiquement dans l'habitacle par un tranducteur d'émission et les impulsions réfléchies sont reçues par un transducteur de réception ou capteur, le signal reçu par ce capteur étant traité pour extraire un signal de détection de l'évènement constitué par une intrusion à l'intérieur de l'habitacle.

Or, lorsque l'adaptation de la chaîne de traitement consiste en la sélection d'un produit de convolution particulier ou encore en un filtrage de caractéristiques spectrales particulières du signal reçu par le capteur, si l'événement à détecter est bref, par exemple d'une durée inférieure à celle de l'acquisition d'un premier résultat d'adaptation, la sélection ou le filtrage ne permettent pas de détecter cet événement.

Le système envisagé dans le document US 4,661,936 comporte une pluralité de transducteurs d'émission ou de réception et la correction des désadaptations de la chaîne de traitement se fait par sélection d'un couple particulier, parmi ceux possible, de signaux émis et recçus par ces transducteurs.

Cette solution n'est pas entièrement satisfaisante car il ne réalise pas véritablement une adaptation de la chaîne de traitement mais choisit de prendre en compte le capteur donnant un signal de réception qui présente le niveau moyen le plus grand. Or l'adaptation de la chaîne de traitement an fonction de ce niveau n'est pas contrôlée, et il se peut que même le signal issu du capteur donnant le niveau le plus élevé soit encore insuffisant pour permettre la détection.

De plus ce système est coûteux à réaliser car ce sont précisément les capteurs, tels que des capsules ultrasonores pour un système d'alarme ultrasonore, qui représentent la part importante du coût du système de détection.

C'est un objet de la présente invention de proposer un système de traitement de signal permettant de pallier ces inconvénients.

En effet, la présente invention concerne un système de traitement du signal de détection d'un capteur, qui se caractérise en ce qu'il comporte :

- une pluralité de voies parallèles de traitement du signal, chacune comprenant un circuit de traitement du signal et un moyen de mesure d'une caractéristique particulière du signal qui produit un signal de mesure;

- un dispositif d'aiguillage, qui répartit le signal sur une voie de traitement particulière ou, lors d'une étape de sélection, sur la pluralité de voies parallèles ;

- un circuit de sélection, comprenant des moyens de comparaison des signaux de mesure à un signal pré-enregistré produit par la sortie d'un moyen générateur d'un critère de sélection de voie de traitement, et qui, lors de ladite étape de sélection, produit un signal de sélection de ladite voie particulière qui est connecté à une entrée de commande du circuit d'aiguillage.

Ainsi, l'adaptation de la chaîne de traitement peut être réalisée lors d'une étape de sélection d'une voie de traitement réalisée par anticipation, c'est à dire en l'absence de l'évènement à détecter.

D'autres caractéristiques et avantages de la présente invention seront mieux compris à l'aide de la description et des figures qui sont :

- la figure 1 : un schéma d'ensemble d'une chaîne de traitement mettant en oeuvre le procédé de l'invention ;

- les figures 2 et 3 : des caractéristiques spectrales de réception selon l'invention.

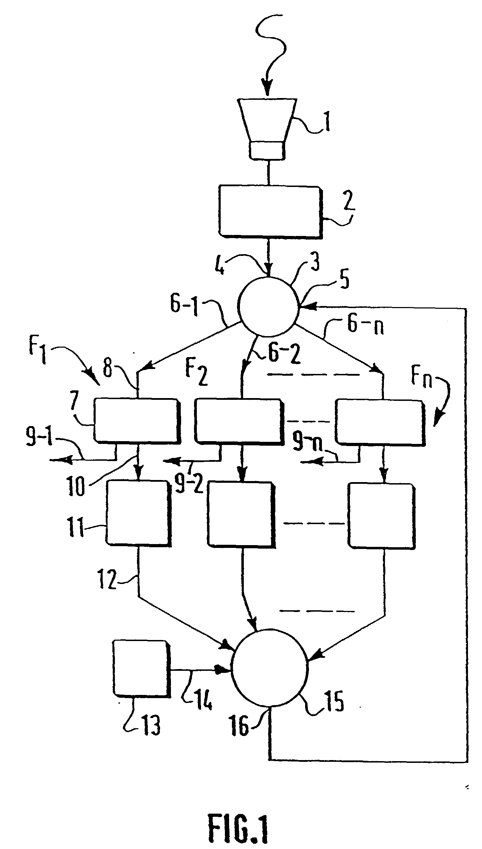

A la figure 1, on a représenté un mode de réalisation préféré d'un système de traitement mettant en oeuvre le procédé de l'invention.

La référence 1 désigne un capteur qui produit un signal de détection qui est mis en forme par un circuit de mise en forme 2, qui peut être réalisé notamment sous forme analogique, selon des moyens connus en eux- mêmes. En particulier, la sortie de ce dispositif 2 peut être constituée par un échantillonneur-bloqueur, suivi par un convertisseur analogique/numérique, non représentés au dessin.

Le signal mis en forme est transmis à l'entrée 4 d'un moyen ou d'aiguillage 3 qui le répartit sur une pluralité de voies de traitement du signal F1, F2, ..., Fn, par exemple de forme numérique si la sortie du moyen de mise en forme 2 est de type numérique.

Les voies de traitement Fi sont constituées de manière semblable, et comportent, comme la voie F1, un circuit 7 de traitement du signal comme un filtre numérique ou comme un convoluteur numérique.

L'entrée 8 du circuit 7 est connectée à la sortie 6-1 correspondante du dispositif d'aiguillage. Chaque voie Fi est ainsi connectée à une sortie correspondante 6-i du dispositif d'aiguillage 3, et reçoit le signal mis en forme à traiter.

Le circuit 7 de traitement du signal comporte une première sortie 10 qui est connectée à l'entrée correspondante d'un circuit de mesure 11 d'une caractéristique physique du signal mis en forme et traité.

Le signal de sortie 12 du circuit de mesure 11 peut être constitué par une mesure du niveau moyen du signal traité. Il peut être constitué par une mesure de largeur spectrale ou par toute autre mesure permettant de sélectionner la meilleure voie de traitement du signal en fonction d'un critère pré-enregistré.

A cet effet, le circuit 11 est connecté par sa sortie 12 à l'entrée correspondante d'un circuit de sélection 15 qui est doté de moyens de comparaison du signal de mesure 12 à un signal pré-enregistré produit par la sortie 14 d'un moyen 13 générateur d'un critère de sélection de voie de traitement.

Dans un mode de réalisation, le critère pré-enregistré est adapté périodiquement ou en permanence en fonction de l'environnement du système de traitement.

Le circuit de sélection reçoit tous les signaux de mesure 12-1, 12-2, ..., 12-n provenant des n voies de traitement Fi et produit en sortie 16 un signal de sélection qui est connecté à l'entrée de commande 5 du dispositif d'aiguillage 3.

En réponse à ce signal de sélection, une voie de traitement Fi particulière qui respecte le critère de sélection testé par le circuit 15 est sélectionné. Chaque circuit de traitement 7 comporte une seconde sortie 9-1, 9-2, ..., 9-n et seule la sortie 9-i est sélectionnée en réponse à ce test sur le critère de sélection.

L'avantage de l'invention réside en ce que, le traitement du signal prenant un certain temps, avant qu'une première valeur traitée du signal soit disponible, le traitement étant par exemple une fonction fi associant de manière itérative P échantillons du signal reçu et mis en forme avec des coefficients adaptables, la sélection de la fonction fi a pu être faite, par anticipation, c'est à dire avant que les événements à détecter n'interviennent.

Dans un mode de réalisation de l'invention, cette sélection par anticipation est atteinte en ce que périodiquement, ou à des instants prédéterminés, le système de traitement est placé en un mode d'adaptation au cours duquel la voie de traitement Fi la meilleure est choisie en fonction du critère enregistré 13.

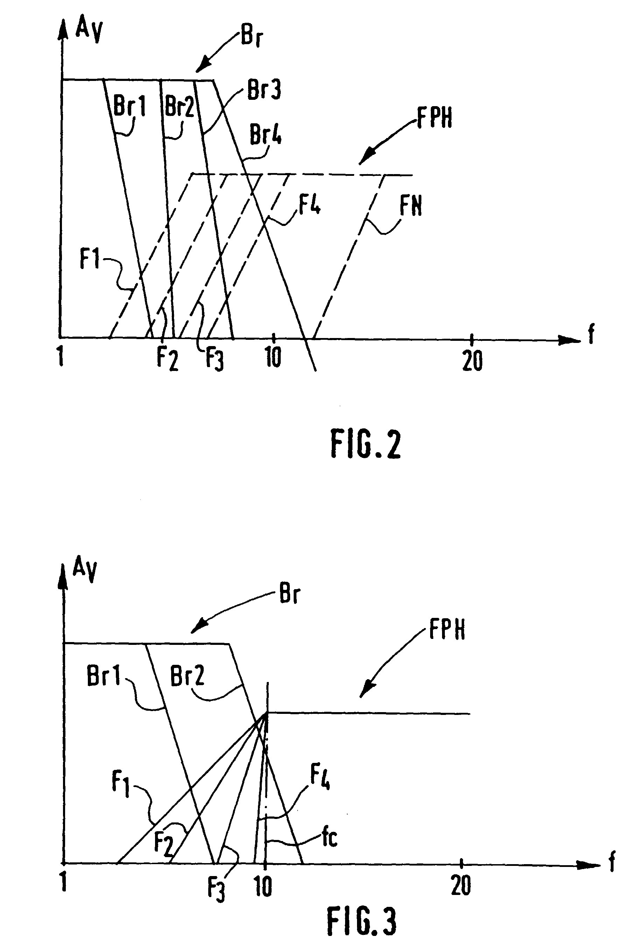

Aux figures 2 et 3, on a représenté des caractéristiques spectrales de réception dans un exemple de réalisation selon l'invention. Dans cet exemple de réalisation, le traitement du signal est constitué par un filtrage passe haut, qui sert à filtrer le signal de détection d'un capteur, comme celui d'une alarme ultrasonore.

Dans un tel signal, l'événement constitué par une intrusion dans un habitacle est un phénomène très bref dont la partie spectrale inférieure est souvent noyée dans un bruit de fond très élevé.

Or, la réalisation d'un filtrage numérique doit tenir compte du fait que ce bruit est évolutif et que la caractéristique de filtrage doit être adaptée avant qu'une intrusion ait lieu.

De ce fait, selon l'invention on choisira comme critère de sélection de la voie de traitement Fi, celle qui produit en moyenne un signal en l'absence de détection d'une intrusion, dont le niveau sera minimal.

A la figure 2, on a représenté des caractéristiques spectrales reconnues dans la présente invention.

On trouve, vers les très basses fréquences, un bruit d'origine thermique Br. Ce bruit s'étend de façon variable depuis le continu jusqu'à une fréquence de quelques hertz, (typiquement, 10 Hz). Il présente une extension et une pente de décroissance spectrale Br1, Br2, Br3, Br4 qui varient au cours du temps, ce qui fait qu'il est difficile de détecter un signal de réception, qui est souvent inférieur en niveau Av à celui du bruit.

Pour cela, on utilise un filtrage numérique de type passe haut selon une caractéristique FPH que l'on adapte en fonction des circonstances.

En utilisant un filtrage de type passe-haut, il est possible de sortir le signal du niveau de bruit, même si le niveau du signal est plus petit que le niveau de bruit. Or, il se trouve que le spectre des signaux d'intrusion est le plus souvent supérieur à la fréquence limite du bruit. De ce fait, si on retire le niveau de bruit, on évite la saturation de la détection à cause du bruit qui masque alors le signal à détecter.

A cet effet, on utilise l'un parmi plusieurs filtrages F1, F2, ..., Fn dont les fréquences de coupure se répartissent depuis quelques Hz jusqu'à plus de 10 Hz, fréquence limite possible du bruit. Mais, il faut pouvoir sélectionner le filtre Fi (ou voie de traitement du signal constitué ici par un filtrage numérique) qui respecte la double condition :

- fréquence de coupure la plus basse possible ;
- niveau de détection minimum en l'absence d'une intrusion (notammment pendant une phase d'adaptation).

Or, le filtrage FPH est réalisé de façon numérique, par exemple sur P0 échantillons X(p) selon une formule du type :

$$\langle X(p) \rangle = \{a(p - P0 + 1).X(p- P0 + 1) +$$

$$a(p - P0 + 2).X(p- P0 + 2) + ... +$$

$$a(p).X(p)\}/P0$$

On peut utiliser des relations où les coefficients de pondération a(i) sont égaux, et des relations où les échantillons X(p - k) sont élevés à une puissance entière b (filtrage d'ordre b).

Or, avant que la première valeur $\langle X(p) \rangle$ soit disponible, il s'écoule une certaine durée pendant laquelle on acquière les P0 échantillons successifs X(p) et pendant laquelle on calcule la valeur moyenne <X(p)>.

De ce fait, si la voie Fi de filtrage choisie correspondait à une situation où le niveau de bruit était supérieur au niveau du signal filtré, il serait peut être trop tard pour changer de filtre Fi si une intrusion avait lieu à ce moment.

Selon un aspect de l'invention, non nécessaire, mais préféré, le fait de disposer d'une batterie de voies de filtrage permet lors de l'étape d'adaptation (ou d'apprentissage) de sélectionner la voie de filtrage Fi0 adaptée qui produit sur une sortie 9-i0 une valeur minimale de tension..

A la figure 3, on a représenté une autre caractéristique spectrale dans laquelle les filtres présentent tous la même fréquence de coupure fc, mais des pentes respectivement d'ordre 1, d'ordre 2 ....

Il est possible de combiner des batteries de filtres passe haut utilisant en combinaison les deux procédés de variation de la pente (ordre du filtrage) ou de la fréquence de coupure).

Dans un mode de réalisation préféré, les filtres sont successivement calculés en utilisant un seul sous programme, auquel on transmet, lors de la phase d'adaptation précédente, une commande (équivalente à la commande d'aiguillage précitée) qui règle la fréquence de coupure et/ ou l'ordre du filtre.

D'autres façons de réaliser l'invention sont possibles sans sortir de la portée définie par les revendications annexées.

En particulier, le signal peut être de type analogique ou numérique. Il peut être de type temporel ou multidimensionnel comme un signal d'image.

D'autre part, pour éviter les fausses sélections, selon l'invention on ne change de sélection que si le signal de sélection 16 produit en sortie du test du critère de sélection produit par le circuit 15 est répété plusieurs fois, notamment lors de p étapes d'adaptation successives.

Dans un mode de réalisation, la sélection d'une voie peut être réalisée par exemple par pondération d'une moyenne entre les différentes sorties 9-1, 9-2, ..., 9-n traitées ultérieurement en sortie du sytème décrit. De cette façon, la sélection produit un ensemble de n coefficients de pondération affectés, par exemple sous forme d'un gain réglable sur lesdites sorties transmises pour la suite du traitement.

## Revendications

1. Système de traitement du signal de détection d'un capteur, caractérisé en ce qu'il comporte :

    - une pluralité de voies parallèles de traitement du signal (F1, F2, ..., Fn), chacune comprenant un circuit (7) de traitement du signal et un moyen de mesure (11) d'une caractéristique particulière du signal qui produit un signal de mesure (12) ;

    - un dispositif d'aiguillage (3), qui répartit le signal sur une voie de traitement particulière (Fi) ou, lors d'une étape de sélection, sur la pluralité de voies parallèles (F1, F2, ..., Fn) ;

    - un circuit de sélection (15), comprenant des moyens de comparaison des signaux de mesure (12) à un signal pré-enregistré produit par la sortie (14) d'un moyen générateur (13) d'un critère de sélection de voie de traitement, et qui produit un signal de sélection (16) de ladite voie particulière (Fi) qui est connecté à une entrée de commande (5) du circuit d'aiguillage (3).

2. Système selon la revendication 1, caractérisé en ce que le circuit (7) de traitement du signal est un filtre numérique, dont l'entrée (8) est connectée à une sortie (6-i) correspondante du dispositif d'aiguillage (3).

3. Système selon la revendication 1, caractérisé en ce que le circuit (7) de traitement du signal est un convolueur numérique, dont l'entrée (8) est connectée à une sortie (6-i) correspondante du dispositif d'aiguillage (3).

4. Système selon la revendication 1, caractérisé en ce que le circuit de mesure (11) d'une caractéristique physique du signal, est un circuit de mesure du niveau moyen du signal.

5. Système selon la revendication 1, caractérisé en ce que le circuit de mesure (11) d'une caractéristique physique du signal, est un circuit de mesure de la largeur spectrale du signal.

6. Système selon la revendication 1, caractérisé en ce que le circuit (7) de traitement du signal de chaque voie de traitement du signal (F1, F2, ..., Fn) comporte une première sortie (10) qui est connectée à l'entrée du circuit de mesure (11) correspondant et une seconde sortie (9-1, 9-2, ..., 9-n), ces secondes sorties constituant les sorties du système.

## Claims

1. A system for processing a detection signal from a sensor, characterised in that it includes:

    - a plurality of parallel paths (F1, F2, ... Fn) for processing of the signal, each of which comprises a circuit (7) for processing the signal and a means (11) which measures a particular characteristic of the signal which produces a measurement signal (12);

- a directing device (3) which distributes the signal on a particular processing path (Fi) or, during a selection step, on the plurality of parallel paths (F1, F2, ... Fn);

- a selection circuit (15), comprising means for comparison of the measurement signals (12) with a prerecorded signal produced by the output (14) of a means (13) for generating a criterion for selection of processing path, and which produces a signal (16) for selection of the said particular path (Fi) which is connected to a control input (5) of the directing circuit (3).

2. A system according to Claim 1, characterised in that the circuit (7) for processing the signal is a digital filter, the input (8) of which is connected to a corresponding output (6 - i) of the directing device (3).

3. A system according to Claim 1, characterised in that the circuit (7) for processing the signal is a digital convoluter, the input (8) of which is connected to a corresponding output (6 - i) of the directing device (3).

4. A system according to Claim 1, characterised in that the circuit (11) for measuring a physical characteristic of the signal is a circuit for measuring the mean level of the signal.

5. A system according to Claim 1, characterised in that the circuit (11) for measuring a physical characteristic of the signal is a circuit for measuring the spectral width of the signal.

6. A system according to Claim 1, characterised in that the circuit (7) for processing the signal from each signal processing path (F1, F2, ... Fn) has a first output (10) which is connected to the input of the corresponding measuring circuit (11), together with a second output (9 - 1, 9 - 2, ... 9 - n), the said second outputs constituting the outputs of the system.

**Patentansprüche**

1. System zur Verarbeitung des Erfassungssignals eines Sensors , **dadurch gekennzeichnet**, daß es die folgenden Bestandteile umfaßt:

- eine Mehrzahl von parallelen Signalverarbeitungskanälen (F1, F2, ..., Fn), die jeweils eine Signalverarbeitungsschaltung (7) und eine Meßeinrichtung (11) zur Messung einer besonderen Kenngröße des Signals enthalten, die ein Meßsignal (12) erzeugt;
- eine Verzweigungsvorrichtung (3), die das Signal auf einen besonderen Verarbeitungskanal (Fi) oder, in einer Auswahlphase, auf eine Mehrzahl von parallelen Kanälen (F1, F2, ..., Fn) verteilt;

- eine Auswahlschaltung (15), die Vergleichsmittel für den Vergleich der Meßsignale (12) mit einem vorgegebenen Signal enthält, das durch den Ausgang (13) einer Gebereinrichtung (13) zur Generierung eines Auswahlkriteriums für die Auswahl des Verarbeitungskanals erzeugt wird, und die ein Auswahlsignal (16) für den besagten besonderen Kanal (Fi) erzeugt, das an einen Steuereingang (5) der Verzweigungsschaltung angeschlossen ist.

2. System nach Anspruch 1, **dadurch gekennzeichnet,** daß die Signalverarbeitungsschaltung (7) aus einem digitalen Filter besteht, dessen Eingang (8) an einen entsprechenden Ausgang (6-i) der Verzweigungsvorrichtung (3) angeschlossen ist.

3. System nach Anspruch 1, **dadurch gekennzeichnet**, daß die Signalverarbeitungsschaltung (7) aus einem digitalen Konvolutionsgenerator besteht, dessen Eingang (8) an einen entsprechenden Ausgang (6-i) der Verzweigungsvorrichtung (3) angeschlossen ist.

4. System nach Anspruch 1, **dadurch gekennzeichnet,** daß die Meßschaltung (11) zur Messung einer physikalischen Kenngröße des Signals aus einer Schaltung zur Messung des mittleren Signalpegels des Signals besteht.

5. System nach Anspruch 1, **dadurch gekennzeichnet**, daß die Meßschaltung (11) zur Messung einer physikalischen Kenngröße des Signals aus einer Schaltung zur Messung der spektralen Bandbreite des Signals besteht.

6. System nach Anspruch 1, **dadurch gekennzeichnet**, daß die signalverarbeitungsschaltung (7) jedes Signalverarbeitungskanals (F1, F2, ..., Fn) einen ersten Ausgang (10), der mit dem Eingang der entsprechenden Meßschaltung (11) verbunden ist, und einen zweiten Ausgang (9-1, 9-2, ..., 9-n) umfaßt, wobei diese zweiten Ausgänge die Systemausgänge bilden.

FIG.1

FIG.2

FIG.3